# EUROPÄISCHE PATENTANMELDUNG

(11) **EP 0 668 705 A2**
(43) Veröffentlichungstag der Anmeldung: **23.08.1995**
(21) Anmeldenummer: 95101381.2
(22) Anmeldetag: 02.02.1995
(51) Int. Cl.: H04Q 3/00, H04M 3/22

(54) **System zum Erkennen der Funktionsfähigkeit eines digitalen Fernmeldenetzes**

(30) Priorität: 16.02.1994 DE 4404827
(71) Anmelder: KE KOMMUNIKATIONS-ELEKTRONIK GMBH & CO, D-30179 Hannover (DE)
(72) Erfinder: Thobe, Josef, Dipl. Ing., D-31552 Rodenberg (DE); Joswig, Jürgen, Dipl. Math., D-30926 Seelze (DE)
(74) Vertreter: Döring, Roger, Dipl.-Ing.

(57) **Zusammenfassung**

Es wird ein System zum Erkennen der Funktionsfähigkeit eines digitalen Fernmeldenetzes angegeben, dessen Topologie einschließlich der Anschlüsse aller Teilnehmer in einer zentralen Datenbank gespeichert ist. In einer mit der Datenbank verbundenen Störungsstelle wird die Übertragungsstrecke jedes einzelnen Teilnehmers bis hin zu einer Vermittlungsstelle, an welche der Teilnehmer angeschlossen ist, nach Eingabe einer Kennung durch einen Bediensteten in einem Schaubild dargestellt. Bereits zentral erfaßte Störungen und eingeleitete Maßnahmen zur Beseitigung derselben werden mit dargestellt. Es kann auf diese Weise schnellstens und umfassend über Störungen von Übertragungsstrecken Auskunft gegeben werden.

## Beschreibung

Die Erfindung bezieht sich auf ein System zum Erkennen der Funktionsfähigkeit eines digitalen Fernmeldenetzes, dessen Topologie einschließlich der Anschlüsse aller Teilnehmer in einer zentralen Datenbank gespeichert ist (CCITT Empfehlung X.700, "DATA COMMUNICATION NETWORKS", 09/92).

Ein solches System ist als sogenanntes "Managementsystem" beispielsweise für das Fernmeldenetz der DBP Telekom einsetzbar. Die in der Datenbank gespeicherten Daten der Topologie des Fernmeldenetzes sind bei entsprechender Zugriffsberechtigung jederzeit abrufbar. Bei dem Managementsystem nach der eingangs erwähnten Empfehlung CCITT X.700 werden Störungen innerhalb des Fernmeldenetzes automatisch gemeldet. Diese Meldungen laufen zu einer zentralen Stelle des Fernmeldenetzes, die Zugriff zur Datenbank hat. Sie werden dort registriert und es wird veranlaßt, daß die Störung so schnell wie möglich beseitigt wird. Dazu wird auch der Zeitpunkt festgelegt, wann das durchgeführt werden soll. Die entsprechenden Daten werden der Datenbank aufgegeben.

Wenn ein Teilnehmer des Fernmeldenetzes bei der Störungsstelle eine Störung seines Anschlusses meldet, kann er durch den Einsatz des geschilderten Managementsystems direkt Auskunft darüber erhalten, um was für eine Störung es sich handelt und wann dieselbe beseitigt werden soll. Dazu muß der Bedienstete der Störungsstelle die Übertragungsstrecke des Teilnehmers, beginnend bei dessen Anschluß bis hin zur Vermittlungsstelle entsprechend der gespeicherten Topologie abfragen. Wenn er einen Fehler gefunden hat, kann er das dem Teilnehmer mitteilen. Er kann auch Auskunft darüber geben, wann die Beseitigung des Fehlers vorgesehen ist. Das geschilderte Managementsystem ist zeitraubend. Es erfordert außerdem eine Fachkraft in der Störungsstelle. Hinzu kommt, daß mehr als ein Fehler in der Übertragungsstrecke des Teilnehmers zunächst nicht festgestellt wird, da der Suchvorgang in vielen Fällen beendet wird, wenn ein Fehler gefunden worden ist.

Der Erfindung liegt die Aufgabe zugrunde, das eingangs geschilderte System so weiterzubilden, daß die Störungsstelle einfacher und schneller einen vollständigen Überblick über die Übertragungsstrecke eines Teilnehmers erhält, so daß eine erschöpfende Auskunft gegeben werden kann.

Diese Aufgabe wird gemäß der Erfindung dadurch gelöst,
- daß in einer mit der Datenbank verbundenen Störungsstelle die Übertragungsstrecke jedes einzelnen Teilnehmers bis hin zu einer Vermittlungsstelle, an welche der Teilnehmer angeschlossen ist, nach Eingabe einer Kennung durch einen Bediensteten in einem Schaubild dargestellt wird und
- daß bereits zentral erfaßte Störungen und eingeleitete Maßnahmen zur Beseitigung derselben mit dargestellt werden.

Mit diesem System wird aus der Topologie des gesamten Fernmeldenetzes jeweils die Übertragungsstrecke eines Teilnehmers zwischen seinem Anschluß und der nächsten Vermittlungsstelle herausgelöst und in der Störungsstelle dargestellt. Sie kann dazu beispielsweise auf einem Bildschirm abgebildet werden. Der Bedienstete der Störungsstelle braucht dazu nur eine definierte Kennung vorzugeben. Im einfachsten Fall wird dafür die Telefonnummer des Teilnehmers gewählt. Der Bedienstete hat dann sofort einen kompletten Überblick über die Übertragungsstrecke. Er sieht direkt, in welchem Bereich bzw. Abschnitt der Übertragungsstrecke ein Fehler vorliegt bzw. ob auch mehr als ein Fehler vorhanden ist. Der anrufende Teilnehmer erhält sofort Auskunft darüber, ob tatsächlich eine Störung vorliegt und wann dieselbe vermutlich beseitigt wird. Rückfragen bei der zentralen Stelle sind dazu nicht erforderlich.

Falls ein Fehler auf der Übertragungsstrecke des die Störungsstelle anrufenden Teilnehmers bestanden hat, bis zum Zeitpunkt des Anrufs aber bereits beseitigt ist, kann das ebenfalls im Schaubild dargestellt werden. Der Bedienstete kann dem Teilnehmer dann mitteilen, daß zwar tatsächlich ein Fehler auf seiner Übertragungsstrecke festgestellt wurde, daß dieselbe inzwischen aber wieder betriebsbereit ist.

Weitere vorteilhafte Ausgestaltungen der Erfindung gehen aus den Unteransprüchen hervor.

Das System nach der Erfindung wird im folgenden anhand der Zeichnungen als Ausführungsbeispiel erläutert.

Es zeigen:

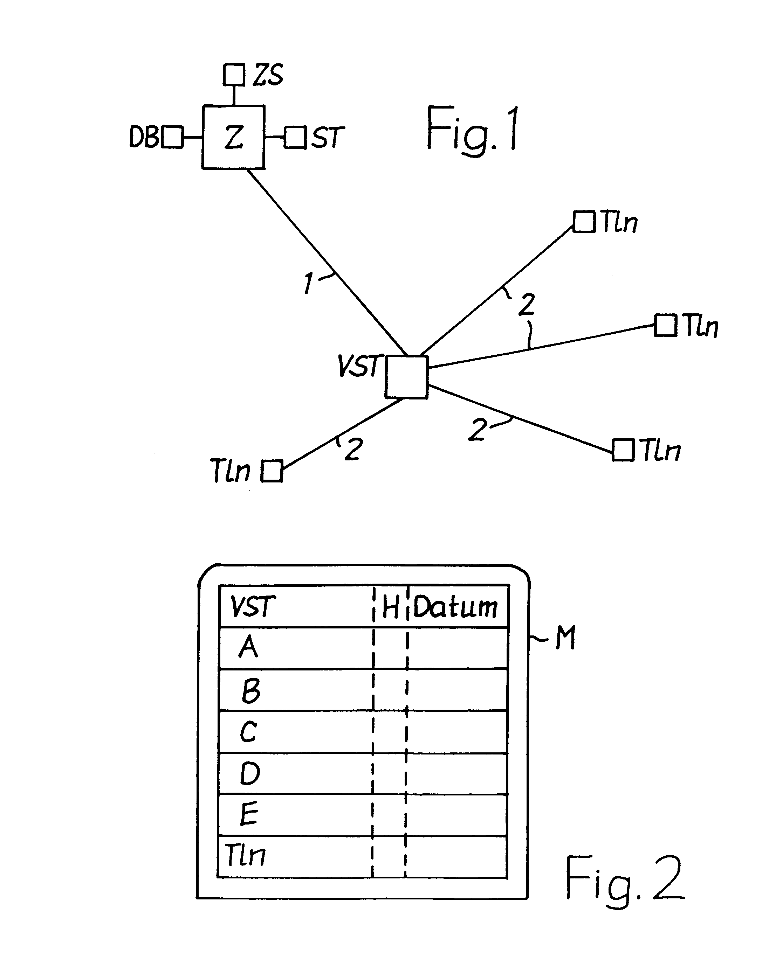

Fig. 1 in schematischer Darstellung einen Ausschnitt aus einem Fernmeldenetz.
Fig. 2 eine Einzelheit des Systems nach der Erfindung in vergrößerter Darstellung.

An eine Zentrale Z eines Fernmeldenetzes ist eine Vermittlungsstelle VST über ein Ortskabel 1 angeschlossen. An die Zentrale Z kann eine größere Anzahl von VST angeschlossen sein. Der Übersichtlichkeit halber ist nur eine VST eingezeichnet. Über Anschlußleitungen 2 sind Teilnehmer Tln mit der VST verbunden. Im dargestellten Ausführungsbeispiel sind vier Tln eingezeichnet.

In der Zentrale Z sind neben vielen anderen Baueinheiten eine Datenbank DB, eine zentrale Stelle ZS zur Bearbeitung von Meldungen aus dem Fernmeldenetz und eine Störungsstelle ST eingerichtet. In der DB ist die Topologie des gesamten Fernmeldenetzes einschließlich der Anschlüsse der Tln datenmäßig gespeichert. Durch ein entsprechendes Managementsystem können zentral alle gespeicherten Strecken, Einheiten, Geräte und Bauteile des Fernmeldenetzes abgefragt und kontrolliert werden.

In der ST ist ein Monitor M vorhanden, auf dem nach Eingabe einer bestimmten Kennung die Übertragungsstrecke jedes Tln von dessen Anschluß bis zur VST dargestellt wird. Das wird am einfachsten durch Wahl der Telefonnummer des jeweiligen Tln als Kennung erreicht. Als Kennung könnten beispielsweise aber auch die Leitungsnummer oder die Rechnungsnummer des Tln verwendet werden. Statt eines Monitors können auch andere Einrichtungen verwendet werden, die eine übersichtliche Darstellung der Übertragungsstrecke ermöglichen. So könnte das Schaubild beispielsweise auch ausgedruckt werden.

Die Übertragungsstrecke ist vorzugsweise in Abschnitte unterteilt, die alle getrennt voneinander datenmäßig in der DB gespeichert sind. Ein solcher Abschnitt kann beispielsweise einen Verstärker oder Regenerator oder auch ein Stück Leitung erfassen. Für jeden Abschnitt ist auf dem Monitor M eine waagerecht verlaufende Zeile vorgesehen. Die oberste Zeile ist beispielsweise für die VST vorgesehen, während in der untersten Zeile der Anschluß des Tln berücksichtigt ist. Die dazwischen liegenden Zeilen sind mit A bis E bezeichnet. Sie sind für Bauteile oder Geräte oder Leitungsstücke der Übertragungsstrecke vorgesehen.

Wenn ein Tln eine Störung seines Anschlusses bei der ST meldet, erhält er von dort aus sofort eine vollständige Antwort. Der Bedienstete wählt dazu die Telefonnummer des Tln.

Dessen Übertragungsstrecke wird dadurch auf dem Monitor M abgebildet. Da alle Störungen innerhalb des Fernmeldenetzes bei der ZS auflaufen und automatisch der DB aufgegeben werden, zeigt das Bild des Monitors M, in welchem Abschnitt eine Störung vorliegt. Wenn von der ZS bereits geklärt ist, wann die Störung beseitigt wird, dann erscheint der entsprechende Zeitpunkt in der Spalte "Datum".

Da bei diesem System alle Störungen erfaßt werden, sind auf dem Monitor M gegebenenfalls auch zwei oder mehr Störungen innerhalb einer Übertragungsstrecke zu erkennen. Der Tln erfährt also direkt, was mit seiner Übertragungsstrecke insgesamt los ist und wann dieselbe wieder funktionsfähig ist.

Auf dem Monitor M kann die Übertragungsstrecke jedes Tln so dargestellt werden, daß der Bedienstete der Störungsstelle auch einen Überblick über die Qualität derselben erhält. Dazu ist es möglich, die jeweiligen Fehler bzw. Störungen durch entsprechende Codierung nach Wertigkeit zu kennzeichnen. Für eine solche Codierung können beispielsweise unterschiedliche Farben verwendet werden.

Der Bedienstete kann dadurch erkennen, ob es sich bei dem in der DB erfaßten Fehler um einen tatsächlich zu beseitigenden Fehler oder nur um eine kurzzeitig auftretende, durch äußere Einflüsse hervorgerufene Störung (EMV-Einfluß oder Bitfehlerrate) handelt.

Auf dem Bildschirm des Monitors M kann auch eine mit "H" bezeichnete Spalte vorgesehen sein, in der die Historie der jeweiligen Übertragungsstrecke erkennbar ist. Das kann von Bedeutung sein, wenn der Tln eine Störung seines Anschlusses nicht sofort bei der Störungsstelle meldet, sondern erst nach einer längeren Zeit. Da alle Störungen automatisch gemeldet und von der ZS bearbeitet werden, kann eine Störung schon wieder beseitigt sein, wenn der Tln sich meldet. Aus der Spalte "H" kann ein entsprechender Hinweis entnommen werden. Dieser Hinweis bleibt für einen vorgegebenen Zeitraum von beispielsweise 24 Stunden erhalten. Der Bedienstete der Störungsstelle kann dem Tln dadurch erschöpfend Auskunft geben.

## Patentansprüche

1. System zum Erkennen der Funktionsfähigkeit eines digitalen Fernmeldenetzes, dessen Topologie einschließlich der Anschlüsse aller Teilnehmer in einer zentralen Datenbank gespeichert ist, dadurch gekennzeichnet,
- daß in einer mit der Datenbank (DB) verbundenen Störungsstelle (ST) die Übertragungsstrecke jedes einzelnen Teilnehmers (Tln) bis hin zu einer Vermittlungsstelle (VST), an welche der Teilnehmer (Tln) angeschlossen ist, nach Eingabe einer Kennung durch einen Bediensteten in einem Schaubild dargestellt wird und
- daß bereits zentral erfaßte Störungen und eingeleitete Maßnahmen zur Beseitigung derselben mit dargestellt werden.

2. System nach Anspruch 1, dadurch gekennzeichnet, daß bereits beseitigte Störungen für eine vorgegebene Zeitdauer ab Beseitigung derselben ebenfalls im Schaubild dargestellt werden.

3. System nach Anspruch 1 oder 2, dadurch gekennzeichnet, daß jede Übertragungsstrecke in Abschnitte unterteilt wird, die mit der Topologie entsprechender gegenseitiger Zuordnung im Schaubild dargestellt werden.

4. System nach einem der Ansprüche 1 bis 3, dadurch gekennzeichnet, daß die jeweilige Übertragungsstrecke auf einem Monitor (M) dargestellt wird.

5. System nach einem der Ansprüche 1 bis 4, dadurch gekennzeichnet, daß als Kennung die Telefonnummer des betreffenden Teilnehmers (Tln) verwendet wird.
